(19) Europäisches Patentamt
European Patent Office
Office européen des brevets

(11) EP 1 918 609 A1

(12) **EUROPEAN PATENT APPLICATION**
published in accordance with Art. 153(4) EPC

(43) Date of publication:
**07.05.2008 Bulletin 2008/19**

(21) Application number: **06781481.4**

(22) Date of filing: **24.07.2006**

(51) Int Cl.:
***F16F 9/04*** (2006.01) ***D01F 6/76*** (2006.01)
***D02G 3/04*** (2006.01) ***D02G 3/28*** (2006.01)
***D02G 3/44*** (2006.01)

(86) International application number:
**PCT/JP2006/314559**

(87) International publication number:
**WO 2007/018031 (15.02.2007 Gazette 2007/07)**

(84) Designated Contracting States:
**DE FR GB**

(30) Priority: **05.08.2005 JP 2005228358**
**02.11.2005 JP 2005319697**

(71) Applicant: **Bridgestone Corporation**
**Tokyo 104-8340 (JP)**

(72) Inventor: **TAMURA, Takanari c/o Bridgestone Corporation**
**Yokohama-shi, Kanagawa 2440812 (JP)**

(74) Representative: **Whalley, Kevin**
**Marks & Clerk**
**90 Long Acre**
**London WC2E 9RA (GB)**

(54) **FIBROUS REINFORCEMENT FOR AIR SUSPENSION AND AIR SUSPENSION**

(57) A fibrous reinforcement for an air suspension includes polyketone fibers. The fibrous reinforcement can improve the pressure resistance, the bending resistance, the peeling resistance between rubber/fiber, the fatigue resistance, and the durability of a rubber film of the air suspension. This reinforcement is formed from polyketone cords or composite fiber cords including polyketone fibers and other fibers. Since the polyketone fibers have excellent adhesion to the rubber and small elongation, the pressure resistance, the bending resistance, the peeling resistance between rubber/fiber, the fatigue resistance, and the durability of the rubber film of the air suspension can be improved by using the polyketone fibers as the fibrous reinforcement.

Fig.1

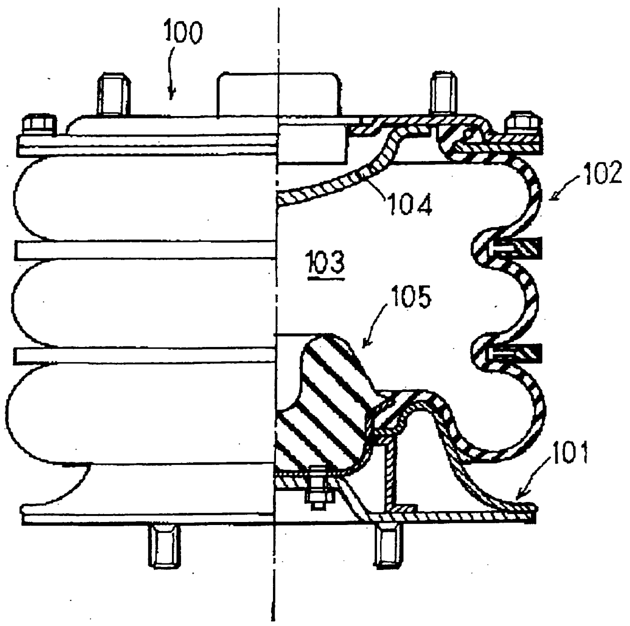


EP 1 918 609 A1

## Description

### Field of the Invention

The present invention relates to a fibrous reinforcement for an air suspension to be used for air suspensions and the like in railroad cars, various types of industrial machinery, and automobiles (passenger cars, trucks, buses, and the like), and an air suspension reinforced by this fibrous reinforcement.

### Background of the Invention

Examples of air suspensions to be used for suspensions in automobiles, suspensions of cabins in trucks, suspensions of seats for sitting, and the like includes those shown in Figs. 1 to 3.

In an air suspension shown in Fig. 1, two ends of a tubular rubber film 102 are attached between an upper plate 100 and a piston 101. A chamber 103 is disposed between these three components and air is supplied to and exhausted from the chamber 103.' An accordion bellows is used as the tubular rubber film 102. An air supply and exhaust hole 104 is disposed in a part of the upper plate 100, and a stopper rubber 105 is disposed on the piston 101 side. This stopper rubber 105 temporarily supports a load when blowout of the air suspension occurs, so as to allow a vehicle to run until the air suspension is exchanged where the vehicle is concerned. Furthermore, the stopper rubber 105 serves as an auxiliary suspension of the air suspension so as to function as a spring and support the load when the air suspension is bent to a large extent.

An air suspension shown in Fig. 2 is an air suspension for a truck. An air chamber 203 is encircled by an upper surface plate 200, a lower surface plate 201, and a rubber film (rubber bellows) 202 with an upper end and a lower end fixed to the upper surface plate 200 and the lower surface plate 201, respectively. Air is infused through an air supply hole 200a disposed at a center portion of the upper surface plate 200 to set a pressure at a predetermined value. The inner pressure of the air chamber 203 is increased by an upward movement of a piston 204 and, thereby, a function as an air suspension is performed (Japanese Unexamined Patent Application Publication No. 2001-20148).

Fig. 3 shows an air suspension for a passenger car. The components having the same functions as those in Fig. 2 are indicated by the same reference numerals as those set forth above. Regarding this air suspension, the inner pressure of an air chamber 203 is increased by an upward movement of a piston 204.

Te known rubber films 102 and 202 of the air suspension are reinforced by fiber cord layers (fiber cord woven fabrics) in which a large number of fiber cords formed from nylon or polyester are inclined relative to the circumferential direction of the rubber film main body and are arranged parallel to each other. Usually, two fiber cord layers are laminated while the first fiber cord layer and the second fiber cord layer are arranged in such a way that the fiber cord directions are inclined bilaterally symmetrically.

The nylon fiber exhibits excellent adhesion to the rubber. On the other hand, since the elongation is large, it is difficult to give sufficient pressure resistance to the rubber film. An aramid fiber is a reinforcing fiber having a small elongation. However, the aramid fiber exhibits poor adhesion to the rubber, and peeling between rubber/fiber easily occurs.

In order to improve the pressure resistance of the rubber film of the air suspension, sometimes, the number of the reinforcing fiber cord layers (the number of lamination of layers) is increased, the density of arrangement of the fiber cords is increased, or a high-strength cord, e.g., a carbon fiber cord, a steel cord, or a glass fiber cord, is used instead of the fiber cord. However, in the case where the number of lamination of the reinforcing fiber cord layers is increased, the film rigidity also increases and the deformation resistance increases. Consequently, fatigue is easily produced due to repetition of bending and the durability is impaired. In the case where the density of arrangement of the fiber cords is increased, it becomes impossible to ensure the rubber in a gap between the fiber cords and interlayer peeling easily occurs. In the case where the high-strength cord is used, the elongation for reinforcing the air suspension is insufficient, the bending resistance becomes poor, and the price becomes high.

Therefore, a technology for improving the pressure resistance, the bending resistance, the peeling resistance between rubber/fiber, the fatigue resistance, and the durability of the rubber film of the air suspension is desired regarding the common reinforcing fiber cord configuration.

### Disclosure of the Invention

It is an object of the present invention to provide a fibrous reinforcement for an air suspension effective for improving the pressure resistance, the bending resistance, the peeling resistance between rubber/fiber, the fatigue resistance, and the durability of a rubber film of the air suspension and an air suspension having the pressure resistance, the bending resistance, the peeling resistance between rubber/fiber, the fatigue resistance, and the durability improved significantly by using this fibrous reinforcement.

A fibrous reinforcement for an air suspension according to the present invention is characterized by including polyketone fibers.

An air suspension according to the present invention is characterized by including rubber reinforced by this fibrous reinforcement for an air suspension.

Brief Description of the Drawings

[Fig. 1] Fig. 1 is a partly sectional front elevation view showing a general air suspension.
[Fig. 2] Fig. 2 is a sectional view showing an air suspension for a truck.
[Fig. 3] Fig. 3 is a sectional view showing an air suspension for a passenger car.

Detailed Description

A fibrous reinforcement according to the present invention includes polyketone fibers.

The polyketone fiber exhibits excellent adhesion to the rubber and small elongation. Therefore, the pressure resistance, the bending resistance, the peeling resistance between rubber/fiber, the fatigue resistance, and the durability of a rubber film of an air suspension can be improved by using the polyketone fibers as the fibrous reinforcement.

The fibrous reinforcement according to the present invention may be formed substantially from a polyketone fiber cord. The fibrous reinforcement according to the present invention may be formed from a composite fiber cord containing polyketone, for example, a composite fiber cord of polyketone fibers and other fibers.

Preferably, the polyketone fiber constituting the fiber cord according to the present invention is produced from polyketone which is a raw material and which is represented by the following general formula (I):

[Chemical formula 1]

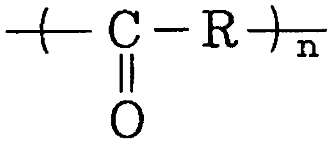

··· (I)

in the general formula (I), R represents a bonding group derived from an ethylenic unsaturated compound and may be the same or different from one repeating unit to another.

The above-described polyketone is an alternating copolymer having a structure in which CO (carbonyl group) units and units derived from ethylenic unsaturated compounds are arranged in a molecule, that is, one olefin unit, e.g., an ethylene unit, is located adjacently to each CO unit in a polymer chain. This polyketone may be a copolymer of carbon monoxide and one type of specific ethylenic unsaturated compound or a copolymer of carbon monoxide and two or more types of ethylenic unsaturated compounds.

Examples of ethylenic unsaturated compounds constituting R in the above-described formula (I) include unsaturated hydrocarbon compounds, e.g., ethylene, propylene, butene, pentene, hexene, heptene, octene, nonene, decene, dodecene, and styrene; unsaturated carboxylic acid or derivatives thereof, e.g., methyl acrylate, methyl methacrylate, vinyl acetate, and undecenic acid; and furthermore, undecenol; 6-chlorohexene; N-vinylpyrrolidone; and a diethyl ester of sulnyl phosphonic acid. These may be used alone or at least two types thereof may be used in combination. In particular, polyketone, in which an ethylenic unsaturated compound primarily containing ethylene is used, is preferable from the viewpoint of the dynamic characteristics, the heat resistance, and the like of the polymer.

In the case where ethylene and other ethylenic unsaturated compounds are used in combination as the ethylenic unsaturated compounds constituting the polyketone, it is preferable that ethylene is used in such a way as to constitute 80 percent by mole of the entire ethylenic unsaturated compounds. If this ratio is less than 80 percent by mole, the melting point of the resulting polymer becomes 200°C or lower and, thereby, the heat resistance of the resulting polyketone fiber may become unsatisfactory. Preferably, the usage of ethylene is 90 percent by mole or more relative to the entire ethylenic unsaturated compounds from the viewpoint of the dynamic characteristics and the heat resistance of the polyketone fiber.

The above-described polyketone can be produced by known methods, for example, the methods described in EP Publication No. 121965 A, EP Publication No. 213671 A, and US Patent No. 3914391, the contents of which are hereby incorporated herein by reference.

Regarding the degree of polymerization of the above-described polyketone, preferably, the solution viscosity measured in m-cresol at 60°C is within the range of 1.0 to 10.0 dL/g. If the solution viscosity is less than 1.0 dL/g, the dynamic strength of the resulting polyketone fiber may become unsatisfactory. Therefore, further preferably, the solution viscosity is 1.2 dL/g or more from the viewpoint of the dynamic strength of the polyketone fiber. On the other hand, if the solution viscosity exceeds 10.0 dL/g, the melting viscosity and the solution viscosity during formation of fibers may become too high and the spinnability may become poor. Therefore, further preferably, the solution viscosity is 5.0 dL/g or less from the viewpoint of the spinnability. It is particularly preferable that the solution viscosity is within the range of 1.3 to 4.0 dL/g in consideration of the dynamic strength, the spinnability, and the like of the fibers.

The above-described method for forming fibers of polyketone is not specifically limited. However, in general, a melt spinning method or a solution spinning method is adopted. In the case where the melt spinning method is adopted, desired fibers can be easily produced by the method described in, for example, Japanese Unexamined Patent Application Publication No. 1-124617, wherein a polymer is melt-spun usually at a temperature at least 20°C higher than the melting point, and preferably about 40°C higher than the melting point, and subsequently, a drawing treatment is performed usually at a temperature at least 10°C lower than the melting point, and preferably about 40°C lower than the melting point with a draw ratio of preferably at least 3 times, and further preferably with a draw ratio of at least 7 times.

On the other hand, in the case where the solution spinning is adopted, desired filaments can be produced by the method described in, for example, Japanese Unexamined Patent Application Publication No. 2-112413 incorporated herein by reference, wherein a polymer is dissolved into, for example, hexafluoroisopropanol, m-cresol, or the like at a concentration of 0.25 to 20 percent by mass, and preferably 0.5 to 10 percent by mass, fibers are formed by extrusion from a spinning nozzle, removal of the solvent and cleaning are performed in a bath of non-solvent, e.g., toluene, ethanol, isopropanol, n-hexane, isooctane, acetone, methyl ethyl ketone, or the like, preferably in an acetone bath to produce spun fibers, and furthermore, a drawing treatment is performed at a temperature within the range of (melting point - 100°C) to (melting point + 10°C), and preferably (melting point - 50°C) to (melting point). It is preferable that an antioxidant is added to this polyketone for the purpose of giving sufficient durability against heat, oxygen, and the like. If necessary, a delustering agent, a pigment, an antistatic agent, and the like can also be blended.

Preferably, the fiber cord substantially formed from the polyketone fiber is produced by performing first twisting of a plurality of polyketone fibers and further performing final twisting. Preferably, the final twisting coefficient thereof is 1,500 or more, in particular, within the range of 1,800 to 2,300. If the final twisting coefficient is less than 1,500, the bending fatigue resistance of the resulting rubber film becomes poor. If the final twisting coefficient is too large, the strength decreases, and the elongation and the creep increase. Therefore, it is preferable that the final twisting coefficient is 2,300 or less.

The final twisting coefficient is calculated, as described below, from the total fineness D (decitex: dtex) of the fibers constituting the cord and the number of final twists G (turns/10 cm).

[Mathematical expression 1]

$$\text{Final twisting coefficient} = G \times \sqrt{D \times 0.9}$$

The number of first twists of this polyketone cord may be the same extent as the number of final twists, although they are not necessarily the same.

The total fineness of the polyketone fibers constituting the polyketone fiber cord is determined on the basis of a required strength force of the cord. For example, it is preferable that the total fineness is 1,800 to 5,010 decitex for the air suspension for a truck, a bus, or a railroad and is 400 to 1,500 decitex for the air suspension for a passenger car.

In the composite fiber cord including polyketone fibers and other fibers (hereafter referred to as "composite fiber cord of polyketone/other fiber"), preferably, the proportion of the total fineness of the polyketone fibers is 34% or more, in particular, 50% to 80% relative to the total fineness of the polyketone fibers and the other fibers constituting the cord. If the fineness of the polyketone fibers is smaller than this range, the effect of the present invention based on the use of the polyketone fibers cannot be exerted satisfactorily. Conversely, if the fineness is too large, the effect of combination with the other fibers cannot be exerted satisfactorily.

Preferably, the final twisting coefficient of the composite fiber cord of polyketone/other fiber is 1,500 or more,

in particular, within the range of 1,800 to 2,300 for the same reason as the above-described reason for the polyketone fiber cord. If the final twisting coefficient is less than 1,500, the bending fatigue resistance of the resulting rubber film becomes poor. If the final twisting coefficient is too large, the strength decreases, and the elongation and the creep increase. Therefore, it is preferable that the final twisting coefficient is 2,300 or less.

The number of first twists of this composite fiber cord of polyketone/other fiber may not be the same as the number of final twists. It is preferable that the number of first twists is within the range of 0.5 to 1.5 times the number of final twists.

The total fineness of the polyketone fibers and the other fibers constituting the composite fiber cord of polyketone/other fiber is determined on the basis of a required strength force of the woven fabric. For example, it is preferable that the total fineness is 1,800 to 5,010 decitex for the air suspension for a truck, a bus, or a railroad and is 400 to 1,500 decitex for the air suspension for a passenger car.

Examples of the other fibers constituting the composite fiber woven fabric include nylon fibers and polyester fibers. One type of these other fibers may be used alone, or at least two types may be used in combination. In particular, it is preferable that the nylon fibers are used as the other fibers. The use of the nylon fibers in combination exerts the effects of increasing the elongation appropriately, improving the shock absorbing property, and facilitating the ride comfort.

In the present invention, 6,6-nylon, 6-nylon, 4,6-nylon, MXD6 nylon, or the like can be used as nylon constituting the nylon fibers. Preferably, 6,6-nylon is used.

In usual cases, the fiber cords are parallel arranged at a predetermined angle with respect to one direction of the rubber film. The number of disposition (density) of the polyketone fiber cords or the composite fiber cords of polyketone/other fiber is determined appropriately in accordance with the fineness thereof, characteristics required of the resulting rubber film, and the like. For example, preferably, the number of disposition is about 40 to 80 cords/5 cm for the air suspension for a truck, a bus, or a railroad and is about 90 to 150 cords/5 cm for the air suspension for a passenger car.

On the other hand, a rubber composition constituting the rubber film of the air suspension according to the present invention is not specifically limited. Common rubber compositions can be used, wherein a rubber component is the primary component and common additives are blended therein. Examples of the additives include a vulcanizing agent, an accelerator (vulcanization accelerator), a reinforcing agent, e.g., carbon and zinc oxide (zinc white), a plasticizer, e.g., aromatic oil, and if necessary, an age resistor, a mold release agent, a dispersing agent, a curing agent, a processing aid and extender, e.g., an adhesion regulator, and a colorant.

For the rubber component, one type of natural rubber (NR), styrene butadiene rubber (SBR), butadiene rubber (BR), chlorosulfonated polyethylene rubber (CSM), chloroprene rubber (CR), ethylene propylene diene rubber (EPDM), ethylene propylene rubber (EPM), butyl rubber (IIR), acrylic rubber (ACM, ANM), ethylene acrylic rubber (AEM), hydrogenated nitrile rubber (HNBR), nitrile rubber (NBR), Hypalon (CSM), urethane rubber (U), and the like or blend rubber of at least two types thereof can be used.

For the purpose of reducing the vulcanization time by performing high temperature vulcanization, it is preferable that a rubber component containing at least one type of heat-resistant rubber is used. Examples of heat-resistant rubber include ethylene propylene diene rubber (EPDM), ethylene propylene rubber (EPM), butyl rubber (IIR), acrylic rubber (ACM), ethylene acrylic rubber (AEM), and hydrogenated nitrile rubber (HNBR).

However, the rubber component may be blend rubber of at least one type of the heat-resistant rubber and at least one type of versatile diene rubber, e.g., natural rubber, styrene butadiene rubber (SBR), butadiene rubber (BR), nitrile rubber (NBR), and chloroprene rubber (CR) or contain the above-described versatile diene rubber as a primary component depending on a vulcanization method.

In the case where the above-described heat-resistant rubber is contained as a primary component, it is preferable that the vulcanization is performed by using organic peroxides, resins, or amines as vulcanizing agents. Examples of the organic peroxides include dicumyl peroxide, di-t-butyl peroxide, t-butyl cumyl peroxide, 1,3-bis(t-butylperoxy-isopropyl)benzene, and 1,1-di-t-butylperoxy-3,3,5-trimethylcyclohexane. Examples of resins include alkylphenol·formaldehyde resins and brominated alkylphenol·formaldehyde resins. Examples of amines include 2,2-bis(4-(4-aminophenoxy)phenyl)propane, diamines, e.g., diaminodiphenylmethane and hexamethylenediamine carbamate, and triethylenetetramine.

These vulcanizing agents other than sulfur may be used alone or at least two types may be used in combination.

If the usage of vulcanizing agent is too large, there is an increasing tendency toward embrittlement and the rubber becomes brittle. If the usage is too small, a crosslinking effect is reduced and a plastic property results, so that an appropriate rubber properties cannot be obtained. Therefore, it is preferable that the usage is specified to be 0.5 to 4.0 parts by weight relative to 100 parts by weight of rubber component.

In the case where the above-described versatile diene rubber is used as the rubber component, it is preferable that efficient vulcanization is performed by using a sulfur-containing compound, e.g., a thiuram based vulcanizing agent, or vulcanization is performed by using an organic vulcanizing agent, e.g., N,N'-m-phenylenedimaleimide, dicumyl peroxide, or 1,3-bis(t-butylperoxy-isopropyl)benzene.

The rubber film of the air suspension according to the present invention can be easily produced by a common molding vulcanization method while the above-described fiber cords according to the present invention are interposed

between unvulcanized rubber formed from the above-described rubber composition.

In the case where the molding vulcanization is performed while the above-described reinforcing fiber cords according to the present invention are interposed between the unvulcanized rubber, if necessary, the reinforcing fiber cords may be impregnated with an adhesive. A common RFL solution (resorcin·formalin·latex) or the like can be used as this adhesive. Preferably, the amount of adhesion thereof is about 3.0% to 8.0% relative to the reinforcing fiber cord.

The dimension of the rubber film of the air suspension according to the present invention is not specifically limited. Usually, it is preferable that the thickness thereof is, for example, 4.0 to 7.0 mm, in particular, about 5 mm for the air suspension for a truck and a bus, 5.0 to 12.0 mm, in particular, about 10 mm for the air suspension for a railroad, and about 2 to 3 mm for the air suspension for a passenger car.

The rubber film of the air suspension according to the present invention can be produced as described below, for example. However, the following method for producing the rubber film is an example of the method for producing the rubber film according to the present invention. Therefore, the method is not limited to the following method.

(1) Method for producing rubber film of air suspension for passenger car

A fiber woven fabric is produced by using the above-described fiber cords. In general, this fiber woven fabric is a cord fabric. Preferably, the thickness of the fiber cord to be used is about 0.2 to 0.4 mm. The thickness of the rubber film of the air suspension for a passenger car is specified to be about 2 to 3 mm, as described above. Therefore, if the thickness of the fiber cord is larger than this range, the thickness of the rubber film increases, the bending rigidity of the rubber film becomes high, and the durability and the ride comfort are adversely affected. If the thickness of the fiber cord is smaller than this range, satisfactory strength is not obtained. Since the polyketone fiber to be used in the present invention has high strength, even when the fiber cord is relatively thin, high strength can be obtained.

As described above, the fiber woven fabric is impregnated with the common adhesive, e.g., the RFL solution, if necessary.

Two fiber woven fabrics described above are used, and both surfaces of each fiber woven fabric are coated with adhesive rubber of CR base or the like. Two coated goods are laminated in such a way that the warp directions of the cord fabrics intersect at a predetermined intersection angle and bilateral symmetry is established in the warp direction. Furthermore, cover rubber of CR base or the like is laminated on both surfaces of the resulting laminated sheet and heat-vulcanization is performed at a predetermined condition. The above-described adhesive rubber has a thickness of about 0.2 to 0.25 mm, and the cover rubber has a thickness of about 0.6 to 0.8 mm.

(2) Method for producing rubber film of air suspension for truck, bus, or railroad

A fiber woven fabric is produced by using the above-described fiber cords. In general, this fiber woven fabric is a cord fabric. The thickness of the fiber cord to be used is not specifically limited. However, about 0.5 to 1.2 mm is preferable. The thickness of the rubber film of the air suspension for a truck, a bus, or a railroad is specified to be about 5 to 10 mm, as described above. Therefore, it is preferable that the thickness of the fiber cord is specified to be within the above-described range from the viewpoint of the bending rigidity, the strength, and the like of the rubber film

As described above, the fiber woven fabric is impregnated with the common adhesive, e.g., the RFL solution, if necessary.

Two fiber woven fabrics described above are used, and both surfaces of each fiber woven fabric are coated with adhesive rubber of NR/SBR base or the like. Two coated goods are laminated in such a way that the warp directions of the cord fabrics intersect at a predetermined intersection angle and bilateral symmetry is established in the warp direction. Furthermore, cover rubber of NR/SBR base or the like is laminated on both surfaces of the resulting laminated sheet and heat-vulcanization is performed at a predetermined condition. The above-described adhesive rubber has a thickness of about 0.25 to 0.35 mm, and the cover rubber has a thickness of about 2 to 4 mm.

## EXAMPLES

The present invention will be specifically described below with reference to the examples and the comparative examples.

In the following description, the polyketone fibers to be used were produced by forming fibers from polyketone represented by the above-described general formula (1) where R was ethylene, the polyketone having a degree of polymerization suitable for exhibiting a solution viscosity measured in m-cresol at 60°C of 4.0 dL/g. The 6,6-nylon fiber was used as the nylon fibers.

EXAMPLES 1 to 8, COMPARATIVE EXAMPLES 1 to 6

Regarding cord fabrics including cords shown in Table 1 with the number of disposition (density) shown in Table 1, the properties were evaluated by the following methods. The results are shown in Table 2.

<Properties of dipped goods>

The cord fabric was dipped in an adhesive solution (RFL solution (resorcin·formalin·latex)), so that the adhesive solution (solid matter) was adhered thereto by 6%. The resulting cord fabric was evaluated by the following methods i) to iii).

i) Strength force and elongation

Regarding one cord, the measurement was performed on the basis of JIS L1017 at a distance between grips of 25 cm and a tensile speed of 30 cm/min.

ii) Heat shrinkage

On the basis of JIS L1017 (method B), heating was performed at a temperature of 180°C for 0.5 hours, cooling was performed for 30 minutes and, thereafter, the value of heat shrinkage was measured.

iii) Tenacity (g/d)

The value of strength force in the unit of N measured in the item i) was converted to a value in the unit of g, and the resulting value was divided by a total denier number of the cord (0.9 denier = 1.0 dt (decitex) so as to determine the tenacity.

<Properties after vulcanization>

Regarding the samples produced as described in the following items [1] and [2], the measurements were performed as described in the following items iv) to ix).

[1] Method for producing rubber film sample of air suspension for passenger car

Two cord fabrics of fiber cords were used after being subjected to an adhesion treatment with the RFL solution. Both surfaces of each cord fabric were coated with adhesive rubber of CR base having a thickness of 0.2 mm. Two coated goods were laminated in such a way that the warp directions of the cord fabrics intersected at a predetermined intersection angle and bilateral symmetry was established in the warp direction. Furthermore, cover rubber of CR base having a thickness of 0.6 mm was laminated on each of the two surfaces of the resulting laminated sheet and vulcanization was performed under the condition of 170°C and 0.75 MPa for 15 minutes.

[2] Method for producing rubber film sample of air suspension for truck, bus, or railroad

Two cord fabrics of fiber cords were used after being subjected to an adhesion treatment with the RFL solution. Both surfaces of each cord fabric were coated with adhesive rubber of NR/SBR base having a thickness of 0.3 mm. Two coated goods were laminated in such a way that the warp directions of the cord fabrics intersected at a predetermined intersection angle and bilateral symmetry was established in the warp direction. Furthermore, cover rubber of NR/SBR base having a thickness of 2.5 mm was laminated on each of the two surfaces of the resulting laminated sheet and vulcanization was performed under the condition of 155°C and 1.5 MPa for 20 minutes.

iv) Strength force

The reinforcing fiber cord was taken out of the vulcanized sample, and the strength force was measured in a manner similar to the above-described method for measuring the strength force of the dipped goods.

v) Strength maintenance ratio after bending (%)

Two coated goods produced as in the above-described items [1] and [2] were laminated in such a way that the warp directions of the cord fabrics were directed in the longitudinal direction of the sample. The resulting vulcanized

sample in the shape of a slip having a width of 25 mm ± 0.5 mm was looped over a pulley, and a bending test was performed under the following condition. After the bending test, the reinforcing fiber cord in the innermost layer during the bending test was taken out, the strength force was measured in a manner similar to the above-described method for measuring the strength force of the dipped goods, and the maintenance ratio thereof (strength after bending test ÷ strength before bending test x 100) was calculated.
pulley diameter: 75 mm
load: 10% of strength force at break
the number of bending: 200,000 times

vi) Adhesion (peeling test)

Two coated goods produced as in the above-described items [1] and [2] were laminated in such a way that the warp directions of the cord fabrics became parallel to each other, so that a laminated sheet in the shape of a slip having a width of 25 mm ± 0.5 mm and a length of 100 mm was produced. Regarding this sample, a peeling test was performed based on JIS K6256-1999 at a rate of 50 mm/min. The adhesion force (N/25 mm width) was determined from the force required for peeling at this time.

vii) Separation resistance (for passenger car)

A piston was actuated under the following condition, and the number of reciprocation of the piston until an irregularity, e.g., leakage of air, bulging due to entrance of air between the rubber fiber cords, or peeling between the rubber fiber cords, occurred.
inner pressure: 1.2 MPa
effective diameter of air suspension: 95 mm
amplitude of piston: ±40 mm

viii) Durability (for truck, bus, and railroad)

A piston was actuated under the following condition, and the number of reciprocation of the piston until an irregularity, e.g., leakage of air or cracking of surface rubber, occurred.
inner pressure: 1.0 MPa
effective diameter of air suspension: 200 mm
amplitude of piston: ±50 mm

ix) Pressure resistance

A maximum pressure until breakage occurred was measured on the basis of JIS D4101.
[Table 1]

| | Reinforcing fiber cord | | | | | | | | | | | | Remarks |
|---|---|---|---|---|---|---|---|---|---|---|---|---|---|
| | Polyketone fiber | | Other fiber | | | Total fineness (decitex) | Proportion of lyketone polyketone fiber* | Number of twists (turn/10 cm) | | Final twisting coefficient | Number of disposition (density) (cords/5 cm) | Thickness (mm) | |
| | Fineness (decitex) | Number of fibers (fibers) | Type | Fineness (decitex) | Number of fibers (fibers) | | | Final (S) | First (Z) | | | | |
| Comparative example 1 | | | nylon | 235 | 2 | 470 | 0 | 60 | 60 | 1234 | 129 | 0.27 | for passenger car |
| Comparative example 2 | | | nylon | 235 | 2 | 470 | 0 | 48 | 48 | 987 | 144 | 0.27 | |
| Comparative example 3 | | | nylon | 235 | 3 | 705 | 0 | 48 | 60 | 1209 | 118 | 0.33 | |
| Comparative example 4 | | | aramid | 220 | 2 | 440 | 0 | 80 | 80 | 1592 | 120 | 0.25 | |
| Comparative example 5 | | | aramid | 220 | 1 | 455 | 0 | 80 | 80 | 1619 | 120 | 0.26 | |
| | | | nylon | 235 | 1 | | | | | | | | |
| Example 1 | 250 | 2 | | | | 500 | 100 | 60 | 60 | 1273 | 120 | 0.25 | |
| Example 2 | 250 | 2 | | | | 500 | 100 | 80 | 80 | 1697 | 120 | 0.26 | |
| Example 3 | 250 | 1 | nylon | 235 | 1 | 485 | 51.5 | 80 | 80 | 1671 | 120 | 0.27 | |
| Example 4 | 250 | 3 | | | | 750 | 100 | 65 | 65 | 1689 | 118 | 0.32 | |
| Example 5 | 250 | 1 | nylon | 235 | 2 | 720 | 34.7 | 65 | 65 | 1655 | 118 | 0.33 | |
| Example 6 | 250 | 2 | nylon | 235 | 1 | 735 | 68.0 | 65 | 65 | 1672 | 118 | 0.33 | |
| Example 7 | 1670 | 2 | | | | 3340 | 100 | 39 | 39 | 2138 | 55 | 0.68 | for truck, bus, railroad |
| Comparative example 6 | | | nylon | 1400 | 2 | 2800 | 0 | 39 | 39 | 1958 | 70 | 0.69 | |
| Example 8 | 1670 | 1 | nylon | 1400 | 1 | 3070 | 54.4 | 36 | 36 | 1892 | 60 | 0.67 | |

*Proportion of fineness of polyketone fiber relative to total fineness (%)

[Table 2]

| | Properties of dipped goods | | | | Properties after vulcanization | | | | | |
|---|---|---|---|---|---|---|---|---|---|---|
| | Strength force (N/ fiber) | Elongation at break (%) | Heat shrinkage (%) | Tenacity (g/d) | Strength force (N/cm) | Maintenance ratio after bending (%) | Adhesion (N/ 25 mm) | Separation resistance (ten thousand times) | Durability (ten thousand times) | Pressure resistance (MPa) |
| Comparative example 1 | 40 | 24.0 | 7.9 | 9.6 | 1032 | 99 | 152 | 25 | | 2.0 |
| Comparative example 2 | 40 | 23.5 | 7.8 | 9.6 | 1152 | 98 | 158 | 27 | | 2.2 |
| Comparative example 3 | 60 | 25.5 | 8.0 | 9.6 | 1416 | 98 | 160 | 32 | | 2.7 |
| Comparative example 4 | 75 | 3.8 | 0.1 | 19.3 | 1800 | 95 | 100 | 40 | | 3.5 |
| Comparative example 5 | 52 | 7.5 | 2.5 | 12.9 | 1248 | 96 | 110 | 40 | | 2.4 |
| Example 1 | 79 | 5.9 | 2.3 | 17.9 | 1896 | 69 | 140 | 100 or more | | 3.7 |
| Example 2 | 70 | 6.0 | 2.3 | 15.9 | 1680 | 95 | 145 | 100 or more | | 3.3 |
| Example 3 | 51 | 9.5 | 3.1 | 11.9 | 1224 | 96 | 155 | 100 or more | | 2.4 |
| Example 4 | 104 | 6.0 | 2.4 | 15.7 | 2454 | 94 | 155 | 100 or more | | 4.8 |
| Example 5 | 70 | 10.0 | 3.2 | 11.0 | 1652 | 96 | 160 | 100 or more | | 3.2 |
| Example 6 | 85 | 9.0 | 2.9 | 13.1 | 2006 | 95 | 162 | 100 or more | | 3.9 |
| Example 7 | 420 | 6.1 | 2.2 | 14.2 | 4620 | 96 | 250 | | 100 or more | 4.1 |
| Comparative example 6 | 220 | 21.5 | 6.5. | 8.9 | 3080 | 99 | 255 | | 55 | 3.0 |
| Example 8 | 271 | 11.5 | 3.1 | 10.0 | 3252 | 97 | 250 | | 100 or more | 3.0 |

As is clear from Tables 1 and 2, according to the present invention, the air suspension exhibiting excellent pressure resistance, bending resistance, peeling resistance between rubber/fiber, fatigue resistance, and durability is provided by the reinforcing effect of the polyketone fiber.

The present invention has been described in detail with reference to specific forms. However, it is apparent to those skilled in the art that various modifications could be made without departing from the spirit or scope of the present invention.

The present invention contains subject matters related to Japanese patent application (Japanese Patent Application No. 2005-228358) filed on August 5, 2005 and Japanese patent application (Japanese Patent Application No. 2005-319697) filed on November 2, 2005, the entire contents of which are incorporated herein by reference.

## Claims

1. A fibrous reinforcement for an air suspension, **characterized by** comprising polyketone fibers.

2. The fibrous reinforcement for an air suspension according to Claim 1, **characterized by** substantially comprising a polyketone fiber cord.

3. The fibrous reinforcement for an air suspension according to Claim 1, **characterized by** comprising a composite fiber cord containing polyketone.

4. The fibrous reinforcement for an air suspension according to Claim 3, **characterized in that** the composite fiber cord comprises a composite fiber cord of polyketone fibers and other fibers.

5. The fibrous reinforcement for an air suspension according to Claim 4, **characterized in that** the other fibers are nylon fibers.

6. The fibrous reinforcement for an air suspension according to Claim 4, **characterized in that** the proportion of the fineness of the polyketone fibers is 34% or more relative to the total fineness of the polyketone fibers and the other fibers.

7. The fibrous reinforcement for an air suspension according to Claim 6, **characterized in that** the proportion is 34% to 80%.

8. The fibrous reinforcement for an air suspension according to Claim 2, **characterized in that** the fiber cord is produced by performing first twisting of a plurality of fibers and further performing final twisting, and the final twisting coefficient is 1,500 or more.

9. The fibrous reinforcement for an air suspension according to Claim 8, **characterized in that** the final twisting coefficient is 1,500 to 2,300.

10. The fibrous reinforcement for an air suspension according to Claim 1, **characterized in that** polyketone is represented by the following general formula (I):

[ Chemical formula 2]

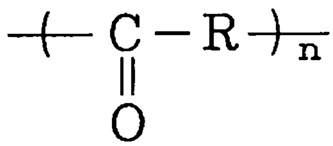

··· (I)

in the general formula (I), R represents a bonding group derived from an ethylenic unsaturated compound and may be the same or different from one repeating unit to another.

**11.** The fibrous reinforcement for an air suspension according to Claim 10, **characterized in that** the ethylenic unsaturated compound is at least one type selected from the group consisting of ethylene, propylene, butene, pentene, hexene, heptene, octene, nonene, decene, dodecene, styrene, methyl acrylate, methyl methacrylate, vinyl acetate, undecenic acid, undecenol, 6-chlorohexene, N-vinylpyrrolidone, and a diethyl ester of sulnyl phosphonic acid.

**12.** The fibrous reinforcement for an air suspension according to Claim 10, **characterized in that** R represents ethylene.

**13.** An air suspension **characterized by** comprising rubber reinforced by the fibrous reinforcement for an air suspension according to Claim 1.

**14.** The air suspension according to Claim 13, **characterized by** comprising a rubber film reinforced by the fibrous reinforcement.

**15.** The air suspension according to Claim 14, **characterized in that** the matrix rubber of the rubber film contains at least one type selected from the group consisting of natural rubber, styrene butadiene rubber, butadiene rubber, chlorosulfonated polyethylene rubber, chloroprene rubber, ethylene propylene diene rubber, ethylene propylene rubber, butyl rubber, acrylic rubber, ethylene acrylic rubber, and hydrogenated nitrile rubber as a primary component.

Fig.1

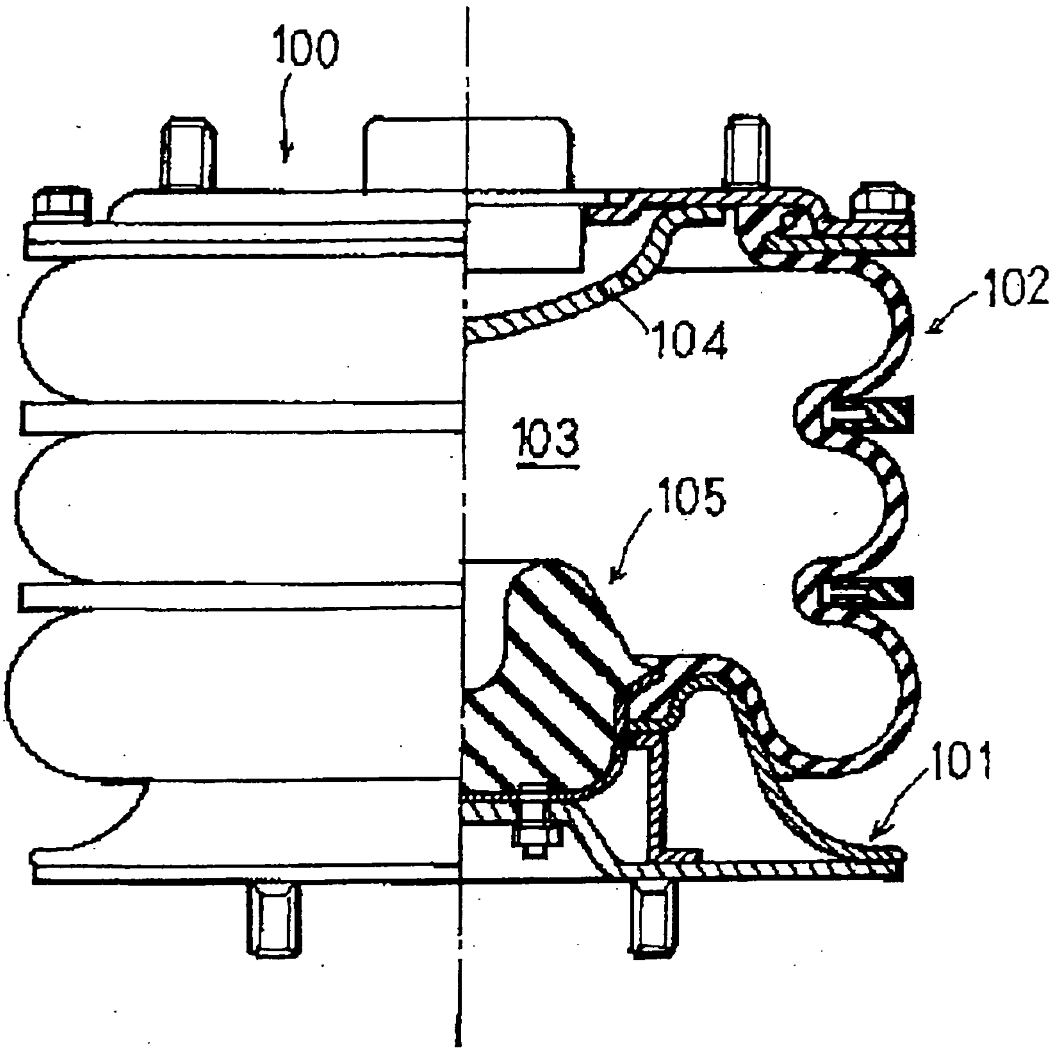

Fig.2

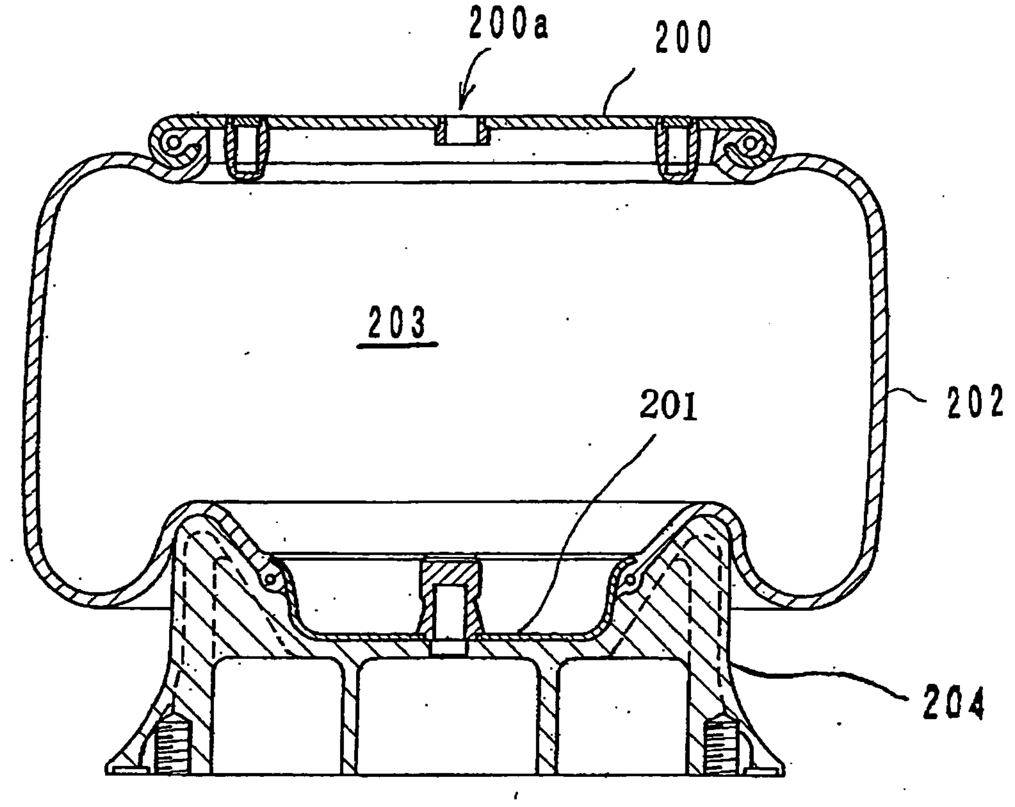

Fig.3

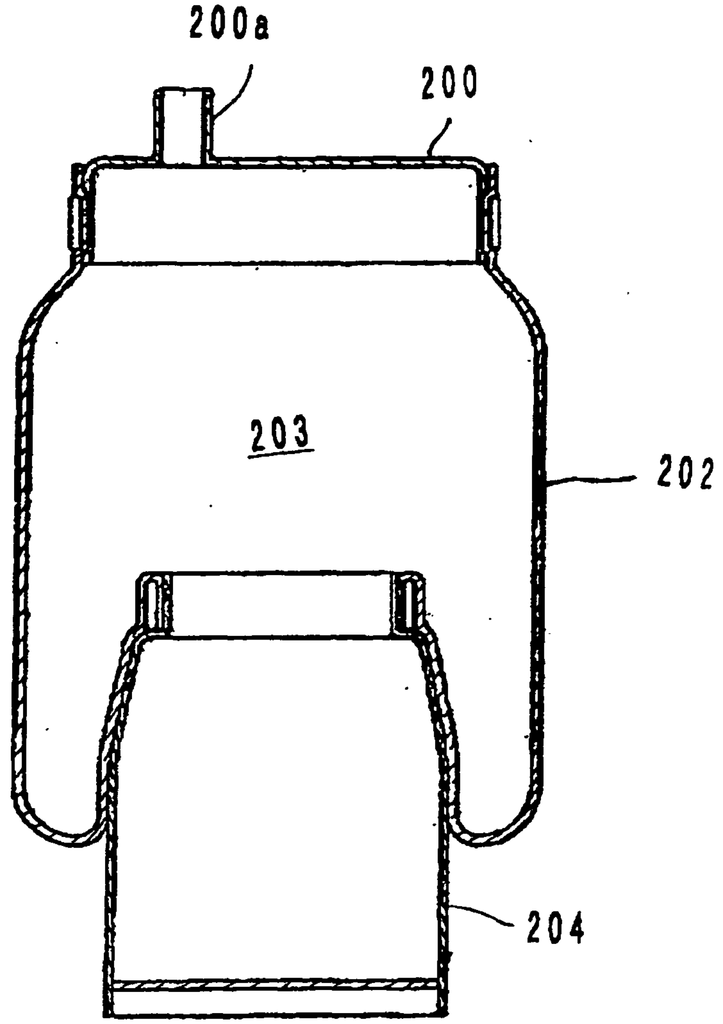

**INTERNATIONAL SEARCH REPORT**

International application No.
PCT/JP2006/314559

A. CLASSIFICATION OF SUBJECT MATTER
*F16F9/04*(2006.01)i, *D01F6/76*(2006.01)i, *D02G3/04*(2006.01)i, *D02G3/28*(2006.01)i, *D02G3/44*(2006.01)i

According to International Patent Classification (IPC) or to both national classification and IPC

B. FIELDS SEARCHED

Minimum documentation searched (classification system followed by classification symbols)
F16F1/00-3/12, F16F15/00-15/08, F16F9/00-9/58, D01F6/76, D02G3/04, D02G3/28, D02G3/44

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-308027 A (Bridgestone Corp.),<br>04 November, 2004 (04.11.04),<br>Par. Nos. [0002], [0004]; chemical formula 1;<br>Par. Nos. [0013], [0026]<br>(Family: none) | 1-2,10-13<br>3-9,14,15 |
| Y | JP 11-334313 A (The Yokohama Rubber Co., Ltd.),<br>07 December, 1999 (07.12.99),<br>Claim 4<br>(Family: none) | 3-7 |
| Y<br>A | JP 2005-205933 A (The Yokohama Rubber Co., Ltd.),<br>04 August, 2005 (04.08.05),<br>Par. Nos. [0011], [0014]<br>(Family: none) | 8,9<br>5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 August, 2006 (08.08.06) | 29 August, 2006 (29.08.06) |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2006/314559

C (Continuation). DOCUMENTS CONSIDERED TO BE RELEVANT

| Category* | Citation of document, with indication, where appropriate, of the relevant passages | Relevant to claim No. |
|---|---|---|
| Y | JP 09-302984 A (Toyo Tire and Rubber Co., Ltd.), 25 November, 1997 (25.11.97), Par. No. [0007] (Family: none) | 14,15 |
| A | JP 2004-308023 A (Bridgestone Corp.), 04 November, 2004 (04.11.04), Par. No. [0002] (Family: none) | 1-15 |
| A | JP 09-324377 A (Kuraray Co., Ltd.), 16 December, 1997 (16.12.97), Par. No. [0009] (Family: none) | 1-15 |
| A | JP 03-000336 A (The Yokohama Rubber Co., Ltd.), 07 January, 1991 (07.01.91), Page 2, lower left column, line 17 to lower right column, line 7 (Family: none) | 1-15 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001020148 A
- EP 121965 A
- EP 213671 A
- US 3914391 A
- JP 1124617 A
- JP 2112413 A
- JP 2005228358 A
- JP 2005319697 A